Europäisches Patentamt

European Patent Office

Office européen des brevets

(11) Veröffentlichungsnummer: **0 262 398 B1**

# EUROPÄISCHE PATENTSCHRIFT

(45) Veröffentlichungstag der Patentschrift: **15.07.92**

(51) Int. Cl.⁵: **B01D 29/72**, B01D 29/48

(21) Anmeldenummer: **87112440.0**

(22) Anmeldetag: **27.08.87**

(54) **Anschwemmfilter.**

(30) Priorität: **16.09.86 DE 3631399**

(43) Veröffentlichungstag der Anmeldung:
**06.04.88 Patentblatt 88/14**

(45) Bekanntmachung des Hinweises auf die
Patenterteilung:
**15.07.92 Patentblatt 92/29**

(84) Benannte Vertragsstaaten:
**DE FR GB IT**

(56) Entgegenhaltungen:
**DE-A- 2 545 684**
**DE-A- 2 828 976**
**DE-A- 3 117 712**
**GB-A- 993 184**
**US-A- 3 310 175**

(73) Patentinhaber: **Boll & Kirch Filterbau GmbH
Siemensstrasse 2
W-5014 Kerpen(DE)**

(72) Erfinder: **Lennartz, Rüdiger, Dipl.-Ing.
Stefan-Lochner-Strasse 45
W-5024 Pulheim(DE)**

(74) Vertreter: **Vollbach, Hans, Dipl.-Ing. et al
Patentanwälte Dipl.-Ing. Buschhoff Dipl.Ing
Hennicke Dipl.-Ing. Vollbach Kaiser-
Wilhelm-Ring 24
W-5000 Köln 1(DE)**

## Beschreibung

Die Erfindung betrifft ein Verfahren zum Ablösen des Filterkuchens von einem Spaltfilterelement, das nach Art einer Schraubenfeder ausgebildet ist, zwischen deren Schraubenwindungen sich die Filterspalten befinden, wobei das Spaltfilterelement mittels eines Schwingantriebs in axiale Schwingungen versetzt wird.

Ferner ist die Erfindung auf einen Anschwemmfilter derjenigen Art gerichtet, wie sie im Oberbegriff des Patentanspruchs 3 angegeben ist und sich aus der DE-A-2 828 976 ergibt, wobei sich der erfindungsgemäße Anschwemmfilter mit besonderem Vorteil zur Durchführung des erfindungsgemäßen Verfahrens einsetzen läßt, obwohl er allgemeiner verwendbar ist.

Bei dem bekannten Anschwemmfilter mit Trockenaustrag des Filterkuchens nach der DE-A-2 828 976 stützen sich die aus den schraubenförmig gewundenen Profilleisten bestehenden Spaltfilterelemente auf einem Stützgerüst ab. An den Schraubenwindungen der Spaltfilterelemente können kleine nocken- oder rippenartige Vorsprünge angeformt sein, mit denen sich die Schraubenwindungen aufeinander abstützen und die dabei die Filterspalten definieren. Solche Spaltfilterelemente sind aus dem DE-U-8 135 058 bekannt.

Bei Anschwemmfiltern mit Trockenaustrag des Filterkuchens wird der von dem Filterhilfsmittel und den ausgefilterten Schmutzstoffen gebildete Filterkuchen an den Filterkerzen bzw. den Spaltfilterelementen getrocknet, indem die in der Trübekammer befindliche Trübe durch Einleiten von Druckluft herausgedrückt wird, wobei die Druckluft zugleich den an den Filterelementen haftenden Filterkuchen trocknet. Um anschliessend den auf z.B. 50% Restfeuchte getrockneten Filterkuchen von den Filterelementen abzulösen, wird der gesamte Filtereinsatz mittels einer Klopf-, Schwing- oder Rüttelvorrichtung in Schwingungen versetzt. Die Praxis hat gezeigt, daß vor allem bei Anschwemmfiltern höherer Leistungen, die im Inneren eine Vielzahl an Filterelementen aufweisen, ein Lösen des Filterkuchens sehr hohe Schlagenergien erfordert, die zu starken Geräuschbelästigungen und zu beträchtlichen Schwingungen und Stoßbeanspruchungen im System führen. Um die Übertragung der Stöße in die Anlagenteile und das Gebäude zu vermeiden, müssen die großbauenden Filterapparate auf Schwingungsdämpfer gesetzt werden.

Da bei dem bekannten Anschwemmfilter nach der DE-A-2 828 976 die Spaltfilterelemente nur im Spannzustand mit Hilfe der zugeordneten Klopf-, Schwing- oder Rütteleinrichtung einer Schlag- oder Rüttelbewegung unterworfen werden, ist ein Lösen des getrockneten Filterkuchens selbst bei starken Rüttelschlägen oftmals nur dann erreichbar, wenn der Filterkuchen an den Spaltfilterelementen eine verhältnismäßig große Dicke hat. Dies zwingt dazu, die im Filtergehäuse hängend gelagerten Spaltfilterelemente in entsprechend großem Abstand zueinander anzuordnen. Demgemäß müssen die Filterapparate bei den geforderten hohen Durchsatzleistungen große Abmessungen erhalten.

Aus der US-A-3 310 175 ist ein Anschwemmfilter bekannt, bei dem die aus Filterkerzen bestehenden Filterelemente von Schraubenfedern umschlossen werden, die von einem Schwingantrieb so betätigt werden, daß sie sich längs über die Filterkerzen bewegen und dabei den anhaftenden Filterkuchen von den Filterkerzen abstreifen. Schließlich ist aus der GB-A-993 184 ein Anschwemmfilter ohne Trockenaustrag des Filterkuchens bekannt, bei dem die Filterelemente in Parallelanordnung an einer gemeinsamen Trennwand hängend angeordnet sind, die den unteren Trüberaum des Filtergehäuses von dem oberen Filtratraum abtrennt. Die Filterelemente weisen Schraubenfedern auf, die von Hubstangen durchgriffen werden, welche mit den unteren Enden der Schraubenfedern verbunden sind und mit ihren die Trennwand durchfassenden oberen Enden innerhalb der Filtratkammer an einem gemeinsamen Stangenträger angeschlossen sind, der zum elastischen Strecken der Schraubenfedern und damit zum Ablösen der Filterkuchen von einem Streck- oder Schwingantrieb, z.B. einem Exzenterantrieb, angetrieben wird.

Aufgabe der Erfindung ist es, das eingangs angegebene Verfahren so auszugestalten, daß ein sicheres Ablösen des Filterkuchens von dem Spaltfilterelement auch ohne größere Schlagenergie erreichbar ist, selbst dann, wenn verhältnismäßig fest haftende Filterkuchen kleinerer Dicken vom Spaltfilterelement entfernt werden. Ferner ist die Erfindung darauf gerichtet, den Anschwemmfilter der im Oberbegriff des Patentanspruchs 3 angegebenen Art nach der DE-A-2 828 976 so auszubilden, daß ein sicheres Ablösen des getrockneten Filterkuchens von den Spaltfilterelementen ohne übermäßig große Schlag- bzw. Schwingungsenergie auch bei kleineren Filterkuchendicken möglich ist, so daß auch die Möglichkeit eröffnet wird, die Spaltfilterelemente in verhältnismäßig dichtem Abstand zueinander im Filtergehäuse anzuordnen und damit die Bauabmessungen des Anschwemmfilters entsprechend zu vermindern.

Die vorgenannte Aufgabe wird mit dem erfindungsgemäßen Verfahren dadurch gelöst, daß das Spaltfilterelement zunächst unter Öffnen seiner Filterspalte in Axialrichtung gestreckt und dann in gestrecktem Zustand der axialen Schwingung mit einer Amplitude, die kleiner ist als der Streckweg, unterworfen wird.

Mit dem erfindungsgemäßen Verfahren ist es möglich, selbst verhältnismäßig fest haftende Filterkuchen von dem nach Art einer Schraubenfeder ausgebildeten Spaltfilterelement sicher abzulösen, da beim Strecken bzw. Längen des Spaltfilterelementes der Filterkuchen praktisch an allen Schraubenwindungen, also an einer Vielzahl von Stellen aufgerissen und dabei in seinem Verband aufgelokkert und zerstört wird. Wird das Spaltfilterelement dann im Streckzustand der axialen Schwingung in seiner Längsrichtung unterworfen, so wird hierdurch das vollständige Ablösen des bereits aufgerissenen und aufgelockerten Filterkuchens bewirkt, so daß im Ergebnis ein rasches und rückstandsfreies Entfernen des Filterkuchens vom Spaltfilterelement erreicht wird. Die Axialschwingung des bereits gestreckten Spaltfilterelementes erfordert nur eine vergleichsweise kleine Schwingenergie, zumal die das Spaltfilterelement bildende Schraubenfeder im gestreckten Zustand eine verhältnismäßig weiche Feder bildet, die sich mit geringer Energie in starke Schwingungen versetzen läßt. Da bei der Abreinigung des Spaltfilterelementes mit vergleichsweise geringer Schwingenergie gearbeitet werden kann, ergibt sich auch keine nennenswerte Geräuschbelästigung. Auch werden keine schädlichen Schwingungen und Stöße in die Anlage und das Gebäude mit den hier befindlichen Maschineneinrichtungen übertragen. Es hat sich gezeigt, daß mit dem erfindungsgemäßen Verfahren auch verhältnismäßig dünne und stark haftende Filterkuchen zuverlässig gelöst werden können. Damit ergibt sich auch der Vorteil, daß eine mehr oder weniger grosse Anzahl an Spaltfilterelementen in verhältnismäßig kleinem Abstand zueinander im Filtergehäuse angeordnet werden kann, so daß der Filter insgesamt erheblich kleiner bauen kann. Aufgrund der verminderten Filterkuchenstärke wird der Verbrauch an Filterhilfsmittel beträchtlich vermindert. Die Spaltfilterelemente benötigen keinen inneren Stützkörper od. dgl., der die einzelnen Schraubenwindungen innenseitig stützt. Die Spaltfilterelemente können, wie bekannt, zylindrisch oder auch leicht konisch ausgeführt werden. Besonders kleine Schwingenergien für das Ablösen des Filterkuchens ergeben sich, wenn der Schwingantrieb mit einer Schwingungsfrequenz arbeitet, die zumindest grob angenähert der Eigenfrequenz des Spaltfilterelementes entspricht. Es ergeben sich hierbei Federschwingungen im Resonanzbereich des Spaltfilterelementes.

Ein für den Trockenaustrag des Filterkuchens bestimmter Anschwemmfilter der erfindungsgemäßen Ausführung, der sich mit besonderem Vorteil für die Durchführung des erfindungsgemässen Verfahrens verwenden läßt, aber auch allgemeinere Verwendung hat, ist im Patentanspruch 3 angegeben. Abweichend von dem bekannten Anschwemmfilter nach der DE-A-2 828 976 sind bei diesem Anschwemmfilter die in den Spaltfilterelementen liegenden rohrförmigen Stangen als Hubstangen ausgeführt, die eine die Spaltfilterelemente unter Öffnen ihrer Filterspalte in Achsrichtung streckende Streckvorrichtung bilden, wobei der Schwingantrieb eine Schwingungsfrequenz hat, die zumindest angenähert der Eigenfrequenz der Spaltfilterelemente entspricht. Bei dieser Ausgestaltung des Anschwemmfilters dienen die in den Spaltfilterelementen angeordneten rohrförmigen Hubstangen also einerseits im Filterbetrieb zur Filtratableitung in den Filtratraum und andererseits bei der Abreinigung der Spaltfilterelemente zum Entfernen des getrockneten Filterkuchens durch Streckung bzw. Schwingbewegung der Spaltfilterelemente. Da hierbei mit einer Schwingungsfrequenz gearbeitet wird, die zumindest in grober Annäherung der Eigenfrequenz der Spaltfilterelemente entspricht, läßt sich eine gründliche Abreinigung der Spaltfilterelemente mit verhältnismäßig kleinen Schwingungsenergien durchführen. Mit dem erfindungsgemäßen Anschwemmfilter läßt sich die geforderte Filtrationsschärfe mit Filterkuchenstärken erreichen, die erheblich kleiner sein können als bei dem bekannten Anschwemmfilter. Das bedeutet, daß bei dem erfindungsgemäßen Anschwemmfilter der Filterkuchen sehr dünn gefahren werden kann und trotzdem auf den Spaltfilterelementen auf die gewünschte Restfeuchte getrocknet und sicher ausgetragen werden kann.

Bei dem erfindungsgemäßen Anschwemmfilter bildet der Schwingantrieb zweckmäßig zugleich einen Streckantrieb zum Strecken der Spaltfilterelemente. Andererseits kann zusätzlich zu dem Schwingantrieb aber auch ein gesonderter Streckantrieb zum Strecken der Spaltfilterelemente vorgesehen werden. Diese letztgenannte Anordnung empfiehlt sich vor allem dann, wenn der erfindungsgemäße Anschwemmfilter für die Durchführung des erfindungsgemäßen Verfahrens eingesetzt wird.

Im einzelnen wird die Anordnung zweckmäßig so getroffen, daß die die Spaltfilterelemente mit radialem Abstand durchgreifenden rohrförmigen Hubstangen die Trennwand durchgreifen und in den Filtratraum eintauchen, wobei sie an ihren oberen Enden über ein Verbindungsglied untereinander verbunden und mit dem Schwing- bzw. Streckantrieb gekoppelt sind. Die rohrförmigen Hubstangen weisen auf ihrem in dem Spaltfilterelement liegenden Längenbereich mindestens eine die Verbindung mit dem Innenraum des Spaltfilterelementes herstellende Rohröffnung und an ihrem außenliegenden Ende eine die Verbindung zu dem Filtratraum des Filters herstellende Rohröffnung auf. Die erstgenannte Rohröffnung befindet sich zweckmäßig in Nähe des mit dem axial beweglichen Ende des Spaltfilterelementes verbundenen Rohrende. Die gekoppelten Hubstangen weisen im übrigen zweckmäßig einen nach oben aus dem Filtratraum herausragende Stangenverlängerung auf, die oberhalb des Filtraumes mit dem Schwingantrieb bzw. dem Streckantrieb gekoppelt ist. Der Schwingantrieb bzw. der kombinierte Streck- und Schwingantrieb befindet sich hierbei also außerhalb des Filtratraums an der Oberseite des Filtergehäuses.

Für den Schwing- und/oder Streckantrieb können unterschiedliche Antriebe vorgesehen werden. Der Streckantrieb bzw. der ihn bildende Schwenkantrieb kann aus einem einfachen Druckluft-Kolbenmotor bestehen. Andererseits kann für den Schwingantrieb ein linearer Schwingmotor, z.B. ein elektromagnetischer Schwingungserzeuger, Verwendung finden. Die periodische Streckung bzw. die Schwingung der Spaltfilterelemente erfolgt im allgemeinen mit einer Frequenz von höchstens etwa 20 Hz, vorzugsweise von 2 - 10 Hz. Die Amplitude der Schwingung des oder der Spaltfilterelemente kann bei einer Länge derselben von etwa 1000 mm bei 20 - 120 mm, im allgemeinen 40 - 80 mm, betragen.

Die Erfindung wird nachfolgend im Zusammenhang mit den in der Zeichnung dargestellten Ausführungsbeispielen näher erläutert. In der Zeichnung zeigen:

Fig. 1      im Vertikalschnitt einen erfindungsgemäßen Anschwemmfilter, der mit einem zugleich den Streckantrieb bildenden Schwingantrieb ausgestattet ist, während des Filtervorgangs;

Fig. 2      ebenfalls im Vertikalschnitt den Anschwemmfilter nach Fig. 1, jedoch mit jeweils einem gesonderten Streck- und Schwingantrieb im Betriebszustand während des Ablösens und Austragens des Filterkuchens;

Fig. 3 bis 6      Teilansichten bzw. Teilschnitte eines bei dem erfindungsgemäßen Anschwemmfilter vorgesehenen Spaltfilterelementes, wobei Fig. 6 eine Ansicht in Richtung des Pfeiles VI der Fig. 5 wiedergibt;

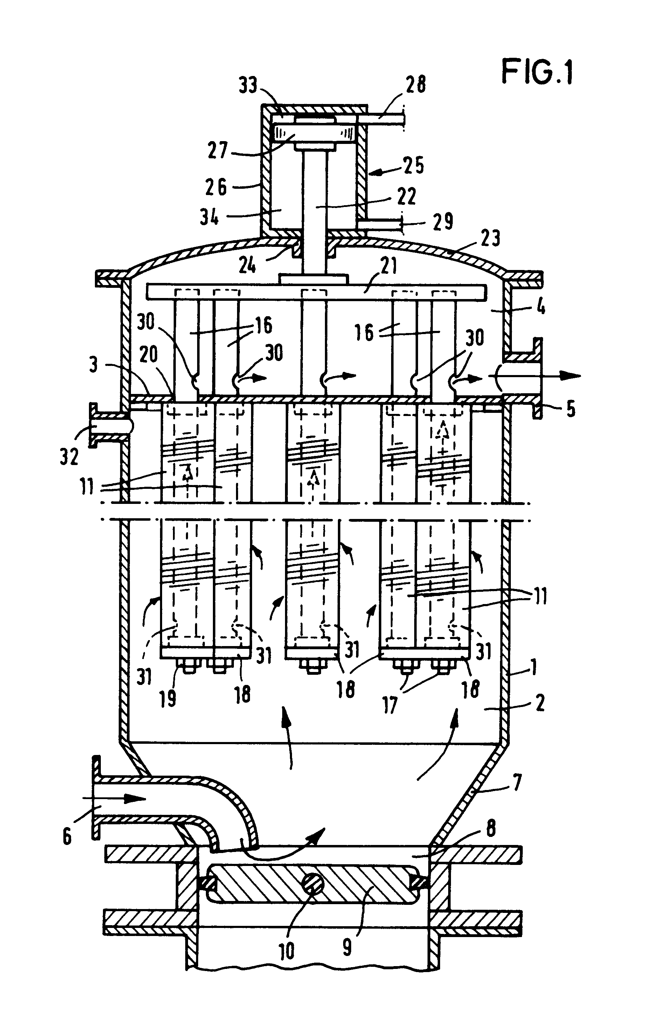

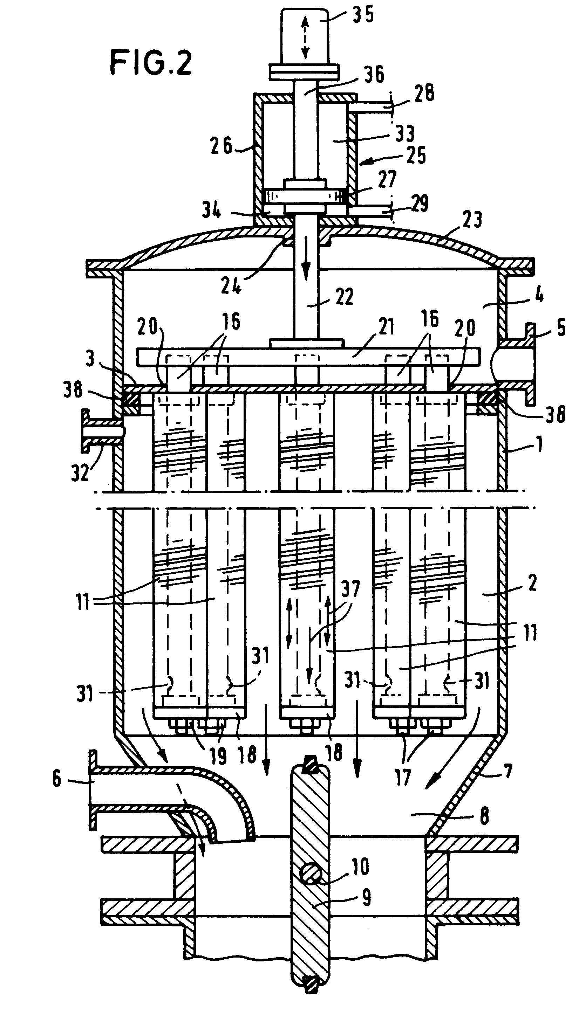

Der in den Fig. 1 und 2 gezeigte Anschwemmfilter weist ein zylindrisches Filtergehäuse 1 mit einem unteren Trüberaum 2 und einem hiervon durch eine Trennwand 3 getrennten oberen Filtratraum 4 auf, der mit dem Filterauslaß 5 versehen ist. Der Filtereinlaß 6 befindet sich im unteren Bereich des Trüberaumes 2. Letzterer weist in seinem trichterförmigen Bodenbereich 7 eine Austragöffnung 8 für den Schmutz- bzw. den Filterkuchenaustrag auf, die durch ein Verschlußorgan 9 verschließbar ist. Letzteres besteht aus einer Klappe 9, die um eine Achse 10 schwenkbar ist.

Der Trüberaum 2 nimmt eine mehr oder weniger große Anzahl an gleichartigen Spaltfilterelementen 11 in Parallelanordnung zueinander auf. Die Spaltfilterelemente 11 sind an der Trennwand 3 hängend angeordnet. Sie sind mit ihrem oberen Ende mit der Trennwand 3 unter Abdichtung fest verbunden.

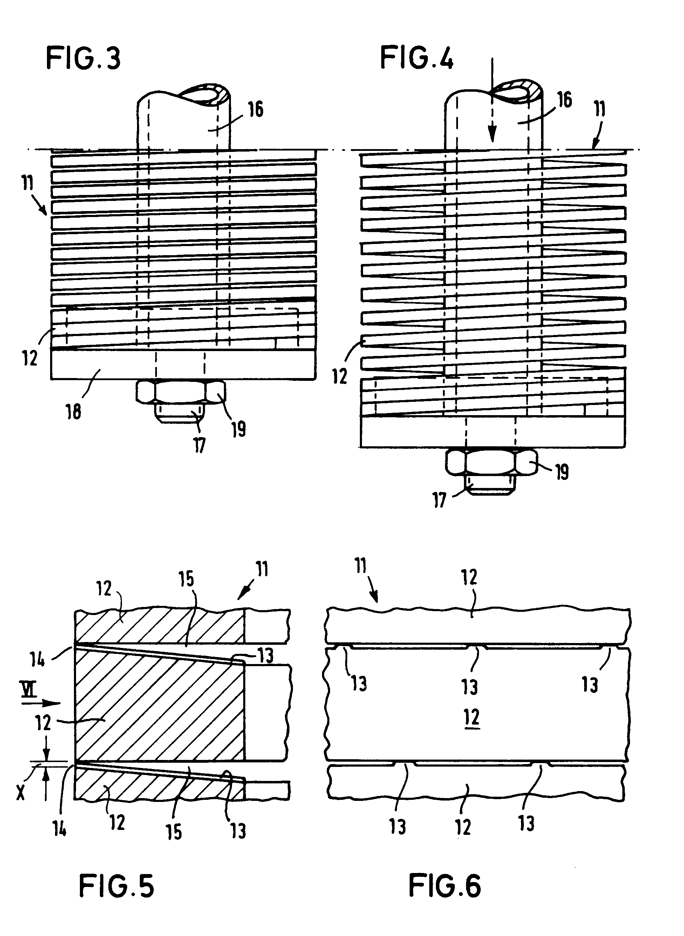

Wie insbesondere die Fig. 3 bis 6 zeigen, bestehen die Spaltfilterelemente 11 aus einem zu einer Schraubenfeder gewundenen Profildraht 12 mit etwa trapezförmigem Querschnitt. Dabei sind an den oberen Flächen der einzelnen Schraubenwindungen kleine Nocken oder Rippen 13 angeformt, die über den Umfang der Schraubenwindungen verteilt angeordnet sind und sich über die gesamte radiale Breite des Profildrahtes erstrecken können (Fig. 5). Die Schraubenwindungen 12 stützen sich demgemäß über die Nocken oder Rippen 13 aufeinander ab, wobei die Nocken bzw. Rippen 13 die Filterspalte 14 mit der erwünschten Spaltweite X definieren.

Spaltfilterelemente der vorgenannten Art sind an sich bekannt. Sie bestehen entweder aus einer zylindrischen Schraubenfeder oder einer schwach konischen Schraubenfeder, die sich zu ihrem unteren Ende hin konisch verjüngt. Die etwa radialen Durchflußkanäle 15 erweitern sich von den außenliegenden Filterspalten 14 zum Innenraum der Schraubenfeder hin, wie Fig. 5 zeigt. Im übrigen ist die Anordnung so getroffen, daß sich die Schraubenfeder im unbelasteten Zustand elastisch zusammenzieht (Fig. 3), wobei in diesem Zustand sich die einzelnen Schraubenwindungen an den nocken- bzw. rippenartigen Erhebungen 13 gegeneinander abstützen.

Die Spaltfilterelemente 11 weisen keinen inneren Stützkörper auf, der die einzelnen Schraubenwindungen von innen her abstützt. Die das Spaltfilterelement 11 bildende Schraubenfeder ist unter Öffnen der Filterspalte 14 elastisch streckbar, wie dies in Fig. 4 gezeigt ist. Diese Streckung erfolgt mit Hilfe einer Streckvorrichtung mit zugeordnetem Streckantrieb. Die Streckvorrichtung weist eine rohrförmige Hubstange 16 auf, die die zugeordnete Schraubenfeder auf ganzer Länge im Radialabstand zu den Schraubenwindungen axial durchgreift und die an ihrem unteren Ende mittels eines Gewindebolzens 17 und einer Haltescheibe 18 mit dem axial beweglichen Ende der Schraubenfeder verbunden ist. Letztere ist mit ihrem Ende unter Abdichtung an der Haltescheibe 18 angeschlossen. Die Sicherung der Verbindung erfolgt mittels einer auf das Gewinde des Zapfens aufgeschraubten Mutter 19.

Die rohrförmigen Hubstangen 16 der Spaltfilterelemente 11 durchgreifen jeweils eine Öffnung 20 der Trennwand 3 und sind im Inneren des Filtratraumes 4 an ein gemeinsames Verbindungsglied 21 angeschlossen, das aus einer Kopfplatte od.dgl. besteht. Letztere weist mittig eine vertikale Stangenverlängerung 22 auf, die oben aus dem Filtratraum 4 herausgeführt ist, wobei sie sich in einer Öffnung 23 des Gehäusedeckels 24 unter Abdichtung führt.

Auf dem Deckel 23 sitzt der Streckantrieb, der bei dem Ausführungsbeispiel nach Fig. 1 zugleich den Schwingantrieb 25 bildet. Der Schwingantrieb 25 besteht aus einem Druckluft-Zylinder mit im Zylinder 26 vertikal geführtem Kolben 27, mit dem die Stangenverlängerung 22 als Kolbenstange verbunden ist. Die Zu- und Ableitungen für die Druckluft auf beiden Seiten des Kolbens 27 sind mit 28 und 29 bezeichnet. In der in Fig. 1 gezeigten oberen Kolbenstellung sind alle Hubstangen 16 angehoben, die Schraubenfedern der Spaltfilterelemente 11 demgemäß dicht zusammengeschoben, so daß sich ihre Schraubenwindungen über die nocken- bzw. rippenartigen Erhebungen 13 gegeneinander abstützen. Dies stellt die Filterposition während des Filtervorgangs dar. In dieser Hubposition befinden sich Öffnungen 30 am Mantel der rohrförmigen Hubstangen 16 im Inneren des Filtratraumes 4. Die Hubstangen 16 weisen in Nähe ihrer unteren Enden, d.h. in Nähe ihrer Verbindungsstellen mit den unteren axial beweglichen Enden der Spaltfilterelemente 11, jeweils mindestens mindestens eine Rohröffnung 31 auf, die die Flüssigkeitsverbindung zwischen dem Innenraum der Spaltfilterelemente 11 und der Hubstange und damit auch mit dem oberen Filtratraum 4 herstellt. Da die Schraubenfedern der Spaltfilterelemente 11 so ausgebildet sind, daß sie sich elastisch zusammenziehen, nehmen sie im drucklosen Zustand des Schwingantriebs 25 die in Fig. 1 gezeigte Position ein, in der die Hubstangen 16 durch die Federkraft in ihrer oberen Hublage gehalten werden. Im Zylinder 26 des Schwingantriebs 25 kann unterhalb des Kolbens 27 eine weitere Schraubenfeder angeordnet sein, die während des Filterbetriebs die Spaltfilterelemente 11 in zusammengeschobenem Zustand hält.

Der in den Fig. 1 und 2 gezeigte Filter ist als Anschwemmfilter mit Trockenaustrag des Filterkuchens ausgebildet. Er weist im oberen Bereich seines Trüberaumes 2 einen Anschluß 32 für die Einleitung eines Druckgases, im allgemeinen von Druckluft, auf. Die Druckgaszuleitung ist mittels eines (nicht dargestellten) Ventils absperrbar.

Bevor die eigentliche Feinfiltration beginnt, wird zunächst ein geeignetes Anschwemm-Mittel (Filterhilfsmittel), z.B. Kieselgur, auf die Spaltfilterelemente 11 aufgeschwemmt. Dabei wird das Filtergerät mit einer in einem Anschwemmbehälter angesetzten Suspension aus Flüssigkeit und Filterhilfsmittel durchströmt. Nach mehrmaligem Umpumpen der Anschwemmvorlage ist das Filterhilfsmittel auf den Spaltfilterelementen 11 aufgeschwemmt; es bildet demgemäß auf den Außenflächen der Spaltfilterelemente 11 die gewünschte Filterhilfsschicht von einer vorbestimmten Dicke. Nach beendeter Anschwemmung des Filterhilfsmittels erfolgt die Umschaltung mittels Ventile auf den Filterkreislauf. Hierbei wird die zu filternde Schmutzflüssigkeit mittels einer Pumpe über den Filtereinlaß 6 in den Trüberaum 2 gefördert. Die Schmutzflüssigkeit durchströmt die auf den Spaltfilterelementen 11 befindliche Filterhilfsmittelschicht und gelangt unter Schmutzablagerung in der Filterhilfsmittelschicht als Filtrat über die Filterspalte 14 in die Spaltfilterelemente 11, wo sie über die Rohröffnungen 31 und die Axialkanäle der rohrförmigen Hubstangen 16 nach oben über die Rohröffnungen 30 in den Filtratraum 4 strömt. Das Filtrat verläßt den Filtratraum 4 über den Filterauslaß 5.

Sobald im Filterbetrieb ein vorbestimmter Differenzdruck zwischen Filtereinlaß und Filterauslaß erreicht ist oder das Beladungsvolumen der Spaltfilterelemente 11 erreicht ist, wird das Filtergerät auf Regenerieren umgeschaltet. Hierbei wird, wie bekannt, über die Zuleitung 32 Druckluft oder ein sonstiges Druckgas von oben in den Trüberaum 2 eingeführt. Die einströmende Druckluft od.dgl. drückt die im Trüberaum 2 befindliche Trübe durch den unteren Filtereinlaß 6 aus der Trübekammer; zugleich drückt sie das noch im Inneren der Spaltfilterelemente 11 und deren Hubstangen 16 befindliche Filtrat über die rohrförmigen Hubstangen 16 in den Filtratraum 4. Bei diesem Vorgang wird zugleich der an den Filterelementen 11 haftende Filterkuchen von der durchströmenden Luft auf den gewünschten Feuchtigkeitsgehalt getrocknet, so daß anschließend der ausgefilterte Schmutz zusammen mit dem Filterhilfsmittel mit verhältnismäßig geringer Restfeuchte ausgetragen werden kann. Hierzu wird die Druckluftzuleitung abgeschaltet und es wird die Schmutzaustragöffnung 8 durch Verschwenken der Klappe 9 geöffnet, wie in Fig. 2 dargestellt ist. Durch Druckbeaufschlagung des oberen Zylinderraumes 33 des Streck- bzw. Schwingantriebs 25 wird der Kolben 27 mit den Hubstangen 16 nach unten gefahren, wodurch die aus den Schraubenfedern bestehenden Spaltfilterelemente 11, wie in Fig. 2 gezeigt, in ihrer Längsrichtung gestreckt werden. Bei dieser Streckung öffnen sich die Filterspalte 14 zwischen den einzelnen Schraubenwindungen der Spaltfilterelemente 11, wie in Fig. 4 gezeigt. Hierdurch wird der anhaftende Filterkuchen an den einzelnen Schraubenwindungen aufgerissen und in seinem Verband weitgehend zerstört.

Bei der Ansführungsform nach Fig. 1 wird der Streckantrieb zugleich als Schwingantrieb 25 verwendet, der so ausgebildet ist, daß durch wechselseitige Druckluftbeaufschlagung der zylinderräume 33 und 34 und entsprechender Steuerung der Druckluft-Zu- und -Ableitungen 28, 29 der Kolben 27 eine periodische Hubbewegung in Abwärtsund Aufwärtsrichtung ausführt mit der Folge, daß die Spaltfilterelemente 11 entsprechend periodisch gestreckt und wieder verkürzt werden. Diese periodische Schwingbewegung der Spaltfilterelemente 11 führt auch bei fest anhaftendem Filterkuchen zu einem raschen Lösen und Abfallen desselben. Der abfallende Filterkuchen wird über die Bodenöffnung 8 aus dem Filtergehäuse 1 ausgetragen.

Bei der geänderten Ausführungsform nach Fig. 2 ist dem Streckantrieb 25 ein gesonderter Schwingungserzeuger als Schwingantrieb 35 zugeordnet, der auf die oben aus dem Zylinder 26 herausgeführte Kolbenstange 36 aufgesetzt ist. Die Anordnung ist hier so getroffen, daß zunächst durch Abwärtsbewegung des Kolbens 27 die Spaltfilterelemente 11 unter Öffnen ihrer Filterspalte 14 gestreckt werden, worauf die gestreckten Schraubenfedern der Spaltfilterelemente 11 durch den Schwingantrieb 35 in axiale Schwingungen versetzt werden, wie dies in Fig. 2 durch Pfeile 37 angedeutet ist. Während der Schwingung bleiben die Spannfilterelemente also in ihrer Streckung.

Der Streckhub der Spaltfilterelemente 11 wird zweckmäßig so groß bemessen, daß sich beim Strecken zumindest angenähert alle Spalte 14 zwischen den Schraubenwindungen öffnen. Die Amplitude der periodischen Streckung liegt bei einer maximalen Länge der Spaltfilterelemente von etwa 1000 mm zwischen 20 und 120 mm, vorzugsweise bei 40 - 80 mm. Mit einer solchen Amplitude der Schwingbewegung läßt sich der zugleich als Schwingantrieb dienende Streckantrieb 25 gemäß Fig. 1 mit einer Frequenz von höchstens 20 Hz, im allgemeinen von etwa 2 - 10 Hz, betreiben, um ein rasches Ablösen des Filterkuchens zu ermöglichen.

Bei der Ausführungsform nach Fig. 2 kann dagegen der Schwingantrieb 35 mit einer Schwingungsamplitude arbeiten, die deutlich kleiner ist als der Streckweg der Spaltfilterelemente mit Hilfe des Streckantriebs 25. Das System wird im übrigen zweckmäßig so eingestellt, daß zumindest grob angenähert mit einer Schwingungsfrequenz gearbeitet wird, die der Eigenfrequenz der Spaltfilterelemente entspricht, so daß sich in den Schraubenfedern der Spaltfilterelemente 11 sich überlagernde Resonanzschwingungen einstellen.

Die vorstehend beschriebenen Ausführungsbeispiele lassen sich in verschiedener Hinsicht ändern. Als Streckantrieb lassen sich auch andere Antriebsvorrichtungen, z.B. elektromagnetische Antriebe, verwenden, die auch zugleich den Schwingantrieb bilden können. Für den gesonderten Schwingungs Schwingungserzeuger 35 kann als Schwingantrieb auch ein kleiner Exzenterantrieb oder auch ein linearer Schwingungsmotor, z.B. ein elektromagnetischer Schwingungserzeuger, Verwendung finden. Die Anzahl der im Filtergehäuse angeordneten Spaltfilterelemente 11 kann unterschiedlich sein. Ggf. kann im Filtergehäuse auch nur ein einziges Spaltfilterelement der beschriebenen Art vorgesehen sein, das in diesem Fall einen größeren Durchmesser erhalten kann. Die Trennwand 3 im Filtergehäuse, an der die Spaltfilterelemente 11 hängend angeschlossen sind, kann starr und fest im Filtergehäuse angeordnet werden. Auch ist es möglich, die Trennwand 3, wie in Fig. 2 bei 38 angedeutet, elastisch zu lagern. Bei dem Anschwemmfilter wird bei dem Einleiten der Druckluft od.dgl. die Trübe zweckmäßig durch den Filtereinlaß 6 herausgedrückt. Statt dessen kann am Filtergehäuse im unteren Bereich aber auch ein zusätzlicher Auslaß vorgesehen werden.

Der erfindungsgemäße Anschwemmfilter läßt sich mit Vorteil auch so ausbilden, daß das oder die streckbaren Spaltfilterelemente mit einer in Vorspannrichtung zu dem bzw. den Spaltfilterelementen wirkenden Federvorrichtung ein elastisches axiales Schwingungssystem bilden, das sich mit geringer Schwingungsenergie in Axialschwingung versetzen läßt. Diese Schwingungsenergie kann von einem schwingantrieb der genannten Art aufgebracht werden.

**Patentansprüche**

1. Verfahren zum Ablösen des Filterkuchens von einem Spaltfilterelement, das nach Art einer Schraubenfeder ausgebildet ist, zwischen deren Schraubenwindungen sich die Filterspalten befinden, wobei das Spaltfilterelement mittels eines Schwingantriebs in axiale Schwingungen versetzt wird, **dadurch gekennzeichnet,** daß das Spaltfilterelement (11) zunächst unter Öffnen seiner Filterspalte (14) in Axialrichtung gestreckt und dann in gestrecktem Zustand der axialen Schwingung mit einer Amplitude, die kleiner ist als der Streckweg, unterworfen wird.

2. Verfahren nach Anspruch 1, **dadurch gekennzeichnet,** daß das Spaltfilterelement (11) einer Schwingung im Bereich seiner Resonanzfrequenz unterworfen wird.

3. Anschwemmfilter für den Trockenaustrag des Filterkuchens, mit einem Filtergehäuse (1), dessen Innenraum durch eine Trennwand (3) in einen oberen Filtratraum (4) mit Filtratauslaß (5) und einen unteren Trüberaum (2) mit Trübeeinlaß (6) unterteilt ist, mit einer oben im Trüberaum angeordneten Druckgaszuleitung (32) für die Trocknung des Filterkuchens (39) und mit einer am Boden des Trüberaumes (2) angeordneten verschließbaren Austragsöffnung (8) für den Filterkuchenaustrag,
mit im Trüberaum (2) angeordneten Spaltfilterelementen (11), die an der Trennwand (3) hängend angeordnet sind und jeweils aus einem zu einer Schraubenfeder gewundenen Profildraht bestehen, dessen Schraubenwindungen sich mit die Filterspalten (14) definierenden nocken- oder rippenartigen Erhebungen (13) od.dgl. aufeinander abstützen,
mit in den Spaltfilterelementen (11) axial angeordneten rohrförmigen Stangen (16) für die Filtratableitung in den Filtratraum (4), wobei die rohrförmigen Stangen (16) mit den unteren Enden der Spaltfilterelemente (11) verbunden und im unteren Verbindungsbereich in den Innenraum der Spaltfilterelemente mündende Rohröffnungen (31) aufweisen,
und mit einem die Spaltfilterelemente (11) zum Lösen des Filterkuchens (39) in Axialschwingung versetzenden Schwingantrieb, **dadurch gekennzeichnet,** daß die rohrförmigen Stangen aus Hubstangen (16) bestehen, die eine die Spaltfilterelemente (11) unter Öffnen ihrer Filterspalte (14) in Achsrichtung streckende Streckvorrichtung bilden und daß der Schwingantrieb (25, 35) eine Schwingungsfrequenz hat, die zumindest angenähert der Eigenfrequenz der Spaltfilterelemente (11) entspricht.

4. Anschwemmfilter nach Anspruch 3, **dadurch gekennzeichnet,** daß der Schwingantrieb (25) zugleich einen Streckantrieb zum Strecken der Spaltfilterelemente (11) bildet.

5. Anschwemmfilter nach Anspruch 3, **dadurch gekennzeichnet,** daß zusätzlich zu dem Schwingantrieb (35) ein Streckantrieb (25) zum Strecken der Spaltfilterelemente (11) vorgesehen ist.

6. Anschwemmfilter nach einem der Ansprüche 3 bis 5, **dadurch gekennzeichnet,** daß die die Spaltfilterelemente (11) mit radialem Abstand durchgreifenden rohrförmigen Hubstangen (16) die Trennwand (3) durchgreifen und in den Filtratraum (4) eintauchen, wobei sie an ihren oberen Enden über ein Verbindungsglied (21) untereinander verbunden und mit dem Schwing- bzw. Streckantrieb (25, 35) gekoppelt sind.

7. Anschwemmfilter nach Anspruch 6, **dadurch gekennzeichnet,** daß die gekoppelten Hubstangen (16) eine nach oben aus dem Filtratraum (4) herausragende Stangenverlängerung (22) aufweisen, die oberhalb des Filtratraumes (4) mit dem Schwingantrieb bzw. Streckantrieb (25) gekoppelt ist.

8. Anschwemmfilter nach einem der Ansprüche 3 bis 7, **dadurch gekennzeichnet,** daß der Streckantrieb (25) bzw. der ihn bildende Schwingantrieb aus einem Druckluft-Kolbenmotor besteht.

9. Anschwemmfilter nach einem der Ansprüche 3 bis 8, **dadurch gekennzeichnet,** daß der Schwingantrieb (35) aus einem linearen Schwingmotor, z. B. einem elektromagnetischen Schwingungserzeuger, besteht.

10. Anschwemmfilter nach einem der Ansprüche 3 bis 9, **dadurch gekennzeichnet,** daß die streckbaren Spaltfilterelemente (11) mit einer in ihrer Vorspannrichtung wirkenden Federvorrichtung ein elastisches axiales Schwingungssystem bilden.

## Claims

1. Process for removing the filter cake from an edge filter element constructed in the manner of a coil spring, between the coil turns of which are situated the filter apertures, the edge filter element being made to vibrate axially by means of an oscillator drive,
characterised in that the edge filter element (11) is first stretched in the axial direction and its filter apertures (14) opened, and is then subjected in the stretched state to axial vibration at a lesser amplitude than the stretching path.

2. Process according to claim 1, characterised in that the edge filter element (11) is subjected to vibration in the range of its resonant frequency.

3. Precoated filter for the solid discharge of the filter cake, comprising: a filter casing (1), the interior of which is divided by a Partition wall (3) into an upper filtrate compartment (4) with filtrate outlet (5) and a lower prefilt compartment (2) with prefilt inlet (6);
a compressed gas feeder line (32) disposed in the top of the prefilt compartment for drying the filter cake (39) and having a sealable discharge port (8) for discharging the filter cake disposed on the floor of the prefilt compartment (2);
edge filter elements (11) disposed in the prefilt compartment (2), arranged suspended from the partition wall (3) and each consisting of a profile wire wound into a coil spring, the coil turns of which rest upon one another by cam-like or fin-like projections (13) or similar, which define the filter apertures (14);

tubular bars (16) disposed axially in the edge filter elements (11) for draining the filtrate into the filtrate compartment (4), the tubular bars (16) being joined to the bottom ends of the edge filter elements (11) and in the lower region of said joint incorporating tube openings (31) which open out inside the edge filter elements;

and an oscillator drive which sets the edge filter elements (11) vibrating axially to loosen the filter cake (39), characterised in that the tubular bars consist of lifting bars (16) which form a stretching device which stretches the edge filter elements (11) axially while opening their filter apertures (14) , and that the oscillator drive (25, 35) has a frequency of oscillation corresponding at least approximately to the natural frequency of the edge filter elements (11).

4. Precoated filter according to claim 3, characterised in that the oscillator drive (25) at the same time constitutes a stretching drive for stretching the edge filter elements (11).

5. Precoated filter according to claim 3, characterised in that in addition to the oscillator drive (35) a stretching drive (25) is provided for stretching the edge filter elements (11).

6. Precoated filter according to one of claims 3 to 5, characterised in that the tubular lifting bars (16) which pass through the edge filter elements (11) with radial clearance pass through the partition wall (3) and dip into the filtrate compartment (4), being joined to one another at their top ends via a connecting member (21) and being coupled to the oscillator drive or stretching drive (25, 35).

7. Precoated filter according to claim 6, characterised in that the coupled lifting bars (16) incorporate a bar extension (22) which projects upwards out of the filtrate compartment (4) and is coupled to the oscillator drive or stretching drive (25) above the filtrate compartment (4).

8. Precoated filter according to one of claims 3 to 7, characterised in that the stretching drive (25), or rather the oscillator drive which constitutes it, consists of a compressed air piston engine.

9. Precoated filter according to one of claims 3 to 8, characterized in that the oscillator drive (35) consists of a linear oscillating motor, e.g. an electromagnetic vibration generator.

10. Precoated filter according to one of claims 3 to 9, characterized in that the stretchable edge filter elements (11) constitute an elastic axial vibration system with a spring mechanism operating in the direction pretensioning said elements (11).

**Revendications**

1. Procédé destiné à détacher le gâteau de filtre d'un élément de filtre à fentes, conçu à la manière d'un ressort hélicoïdal, entre les spires duquel se trouvent les lamelles du filtre, l'élément de filtre à fentes étant mis en oscillation axiale au moyen d'un mécanisme d'entraînement en oscillation, caractérisé en ce que l'élément de filtre à fentes (11) est tout d'abord tendu axialement par ouverture de ses lamelles de filtre (14) puis soumis, à l'état étiré, à l'oscillation axiale avec une amplitude inférieure à la longueur d'étirement.

2. Procédé selon la revendication 1, caractérisé en ce que l'élément de filtre à fentes (11) est soumis à une oscillation dans le domaine de sa fréquence de résonance.

3. Filtre à couches pour l'extraction à sec du gâteau de filtre, comportant un boîtier de filtre (1) dont le volume intérieur est partagé, par une cloison (3), en une chambre de filtrat (4) supérieure avec sortie de filtrat (5) et une chambre de liquide trouble (2) inférieure avec entrée de liquide trouble (6), comportant une arrivée de gaz sous pression (32), placée à la partie supérieure dans la chambre de liquide trouble, pour le séchage du gâteau de filtre (39) et comportant une ouverture d'extraction (8) pour l'extraction du gâteau de filtre, pouvant être fermée, placée sur le fond de la chambre de liquide trouble (2), comportant des éléments de filtre à fentes (11) placés dans la chambre de liquide trouble (2) et qui sont suspendus à la cloison (4) et constitués chacun d'un fil profilé enroulé en ressort hélicoïdal dont les spires prennent appui les unes sur les autres, par des bossages (13) en forme de cames ou de nervures, définissant les fentes de filtre (14), comportant des tiges (16) tubulaires, placées axialement dans les éléments de filtre à fentes (11), pour le guidage du filtrat vers la chambre de filtrat (4), les tiges tubulaires (16) étant reliées aux extrémités inférieures des éléments de filtre à fentes (11) et présentant, dans la zone de liaison inférieure, des ouvertures de tube (31) débouchant dans le volume intérieur des éléments de filtre à fentes, et comportant un mécanisme d'entraînement en oscillation mettant en oscillation axiale les éléments de filtre à fentes (11) pour détacher le gâteau de filtre (39), caractérisé en ce que les tiges tubulaires sont faites de tiges de levée (16) qui forment un dispositif d'étirage, étirant les éléments de filtre à fentes (11) par ouverture de leurs fentes de filtre (14) dans la direction axiale et en ce que le mécanisme d'entraînement en oscillation (25, 35) présente une fréquence d'oscillation qui correspond au moins approximativement à la fréquence de résonance des éléments de filtre à fentes (11).

4. Filtre à couches selon la revendication 3, caractérisé en ce que le mécanisme d'entraînement en oscillation (25) forme en même temps un mécanisme d'étirement, pour étirer les éléments de filtre à fentes (11).

5. Filtre à couches selon la revendication 3, caractérisé en ce qu'en plus du mécanisme d'entraînement en oscillation (35) il est prévu un mécanisme d'étirement (25) pour étirer les éléments de filtre à fentes (11).

6. Filtre à couches selon l'une des revendications 3 à 5, caractérisé en ce que les tiges de levée (16) tubulaires, traversant les éléments de filtre à fentes (11), avec une distance radiale, traversent la cloison (3) et pénètrent dans la chambre de filtrat (4), les tiges (16) étant reliées entre elles et accouplées au mécanisme d'entraînement en oscillation ou au mécanisme d'étirement (25, 35), par un organe de liaison (21).

7. Filtre à couches selon la revendication 6, caractérisé en ce que les tiges (16) accouplées présentent un prolongement (22) ressortant vers le haut de la chambre de filtrat (4), qui est accouplé au-dessus de la chambre de filtrat (4), avec le mécanisme d'entraînement en oscillation ou le mécanisme d'étirement (25).

8. Filtre à couches selon l'une des revendications 3 à 7, caractérisé en ce que le mécanisme d'étirement (25) ou le mécanisme d'entraînement en oscillation le formant, est constitué d'un moteur à piston à air comprimé.

9. Filtre à couches selon l'une des revendications 3 à 8, caractérisé en ce que le mécanisme d'entraînement en oscillation (35) est constitué d'un moteur oscillant linéaire, par exemple d'un générateur d'oscillations électromagnétiques.

10. Filtre à couches selon l'une des revendications 3 à 9, caractérisé en ce que les éléments de filtre à fentes (11) étirables forment un système oscillant axial élastique, avec un dispositif à ressort agissant dans le sens de sa prétension.

# FIG.1

FIG.2

## FIG.3

## FIG.4

16

11

12

18

17

19

16

11

12

19

17

## FIG.5

12

15

11

14

13

VI

12

X

14

12

15

13

## FIG.6

11

12

13

13

13

13

12

13

13

12

13